# EUROPEAN PATENT APPLICATION

(11) **EP 2 012 531 A2**
(43) Date of publication of application: **07.01.2009**
(21) Application number: 08159321.2
(22) Date of filing: 30.06.2008
(51) Int. Cl.: H04N 5/44, H04N 7/24

(54) **Program guide data decoding method and apparatus of digital broadcast receiver**

(30) Priority: 05.07.2007 KR 20070067355
(71) Applicant: Samsung Electronics Co., Ltd., Suwon-si Gyeonggi-do (KR)
(72) Inventor: Lee, Jong Kerl, Gyeonggi-do (KR); Kang, Jae Sung, Gyeonggi-do (KR)
(74) Representative: Harrison Goddard Foote

(57) **Abstract**

A program guide data decoding method for a digital broadcast receiver includes detecting a request to decode structural data including a data unit and decoding the structural data using a template that matches the structure of the data unit when the matching template exists.

## Description

### BACKGROUND OF THE INVENTION

### FIELD OF THE INVENTION

The present invention relates to a digital broadcast receiver and, in particular, to a program guide data decoding method and apparatus of a digital broadcast receiver that may efficiently decode program guide data, such as Electronic Service Guide (ESG) data.

### DISCUSSION OF THE BACKGROUND

With the advance of digital broadcast technology and the commencement of the digital broadcast services, there has been a growing interest in digital broadcast receivers. In order to meet various user requirements, various types of digital broadcast receivers have been developed. For example, mobile phones equipped with digital broadcast modules have been widely distributed.

Korean Digital Multimedia Broadcasting (DMB), European Digital Video Broadcast-Handheld (DVB-H), and American Mediaflo are prominent digital broadcast technologies for the mobile environment.

Typically, digital broadcast services are provided with specific program guide data, such as Electronic Program Guide (EPG) data and Electronic Service Guide (ESG) data, to allow a viewer to navigate, select, and discover content by time, title, channel, genre, etc.

The ESG is a program guide for use in the DVB-H and ESG data is transferred to the devices using the File delivery over Unidirectional Transport (FLUTE) protocol. The ESG data is transferred in an ESG container, which is composed of Binary format for Multimedia description stream (BiM) fragments. The BiM fragment is generated by encoding ESG extensible Markup Language (XML) data with a BiM compression scheme.

If ESG data in an ESG container is received, the digital broadcast receiver (e.g., DVB-H terminal) decodes the BiM fragments contained in the ESG container to read the XML data. Since the ESG data is relatively large, the digital broadcast receiver stores the ESG data in a compressed state and decodes, whenever specific information is required, the BiM fragments corresponding to the specific information to read the XML data. Accordingly, the program guide data-loading delay of the digital broadcast receiver depends on the time required to decode the BiM fragments.

### SUMMARY OF THE INVENTION

The present invention provides a program guide data decoding method and apparatus for a digital broadcast receiver that may quickly and efficiently decode structural data, such as program guide data.

Additional features of the invention will be set forth in the description which follows, and in part will be apparent from the description, or may be learned by practice of the invention.

The present invention discloses a program guide data decoding method for a digital broadcast receiver comprising detecting a request to decode structural data comprising a data unit and decoding the structural data using a template that matches the structure of the data unit when the matching template exists.

The present invention also discloses a program guide data decoding method for a digital broadcast receiver comprising recognizing a structure type of one of Binary format for Multimedia description stream (BiM) fragments constituting an Electronic Service Guide (ESG) data, determining whether a template matching with the BiM fragment exists in a storage, and decoding the BiM fragment using the template when the template having the structure type exists in the storage, , and decoding each bit of the BiM fragment when the template having the structure type does not exist in the storage.

The present invention also discloses a program guide data decoding apparatus of a digital broadcast receiver comprising a broadcast reception module to demodulate a broadcast signal received through a tuned service channel, a storage unit to store a plurality of templates used in decoding program guide data, and a control unit. The control unit extracts program guide data from the broadcast signal, stores the program guide data in the storage unit, and decodes the program guide data using the templates in response to a decoding request.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 is a block diagram showing a configuration of a program guide data decoding apparatus of a digital broadcast receiver according to an exemplary embodiment of the present invention.

FIG. 2 is a diagram showing a decoding scheme of a program guide data decoding apparatus according to an exemplary embodiment of the present invention.

FIG. 3A and FIG. 3B are diagrams showing data structures of exemplary BiM fragments of a program guide data decoding apparatus according to an exemplary embodiment of the present invention.

FIG. 4 is a flowchart showing a program guide data decoding method for a digital broadcast receiver according to an exemplary embodiment of the present invention.

FIG. 5 is a flowchart showing a program guide data decoding method for a digital broadcast receiver according to another exemplary embodiment of the present invention.

FIG. 6 is a flowchart showing a program guide data decoding method for a digital broadcast receiver according to another exemplary embodiment of the present invention.

FIG. 7 is a diagram showing steps of creating a new template in a program guide data decoding method according to an exemplary embodiment of the present invention.

### DETAILED DESCRIPTION OF EXEMPLARY EMBODIMENTS

The invention is described more fully hereinafter with reference to the accompanying drawings, in which embodiments of the invention are shown. This invention may, however, be embodied in many different forms and should not be construed as limited to the embodiments set forth herein. Rather these embodiments are provided so that this disclosure is thorough, and will fully convey the scope of the invention to those skilled in the art. Like reference numerals in the drawings denote like elements.

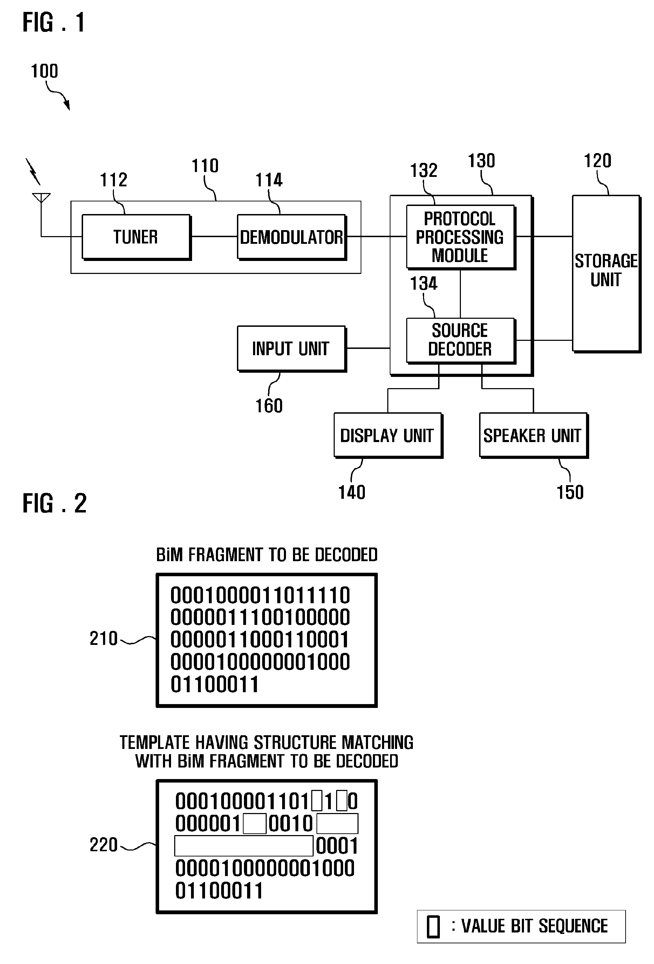

FIG. 1 is a block diagram showing a configuration of a program guide data decoding apparatus of a digital broadcast receiver according to an exemplary embodiment of the present invention.

Referring to FIG. 1, the program guide data decoding apparatus of a digital broadcast receiver includes a broadcast reception module 110 to receive a broadcast signal on a service channel and demodulate the received broadcast signal, a storage unit 120 to store templates for decoding program guide data, and a control unit 130 to extract the program guide data from the broadcast signal, store the program guide data, and decode the program guide data using a specific template.

The program guide data decoding apparatus 100 further includes a display unit 140 to output a video signal extracted from the broadcast signal in the form of a visual image, a speaker unit 150 to output an audio signal extracted from the broadcast signal in the form of an audible sound wave, and an input unit 160 to receive a user input.

The broadcast reception module 110 is tuned to a frequency of a service channel to receive a broadcast signal on the frequency and demodulate the broadcast signal under the control of the control unit 130.

For this purpose, the broadcast reception module 110 is provided with a tuner 112 that may be tuned to receive a broadcast signal on a specific frequency and a demodulator 114 to demodulate the broadcast signal output by the tuner 112.

The broadcast reception module 110, i.e. the tuner 112 and the demodulator 114, is switched on and off periodically by the control unit 130 to receive and demodulate the broadcast signal.

The storage unit 120 stores the application data and user data that is used to operate functions of the digital broadcast receiver including broadcast signal reception and playback and a plurality of templates that is used to decode the program guide data.

The control unit 130 performs protocol processing on the broadcast signal received by the broadcast reception module 110 to extract the video data, audio data, and program guide data from the broadcast signal. The control unit 130 also decodes the video and audio data to output the video and audio data through the display unit 140 and the speaker unit 150, respectively.

For these purposes, the control unit 130 includes a protocol processing module 132 to perform protocol processing on the broadcast signal to output the video, audio, and program guide data, and a source decoder 134 to decode at least one of the video and audio data.

The input unit 160 includes at least one of a keypad and a touch panel integrated into the display unit 140 to form a touchscreen, which operates as an integrated input and display means.

The control unit 130 stores the program guide data in the storage unit 120 and decodes the program guide data with reference to the templates stored in the storage unit 120. The program guide data may be ESG data. The program guide data is composed of a plurality of ESG containers, each aggregating BiM fragments. The BiM fragments can be compressed in ESG containers using a specific compression scheme, such as qzip. The control unit 130 may decompress the ESG containers to read the data of the BiM fragments.

If access to the program guide data is attempted, i.e. a user requests to load the program guide data through a menu command, the control unit 130 decodes the respective BiM fragments contained in the ESG containers corresponding to a requested part of the program guide data. At this time, the control unit 130 retrieves a template having a data structure corresponding to the BiM fragment to be decoded from the storage unit 120.

As shown in an example of FIG. 2, if the bits of a BiM fragment 210 to be decoded are completely matched with those of one of the previously stored templates 220, the control unit 130 decodes the BiM fragment using the template 220. Here, the template is an XML data of the BiM fragment, i.e. structure bits among bits composed of structure bits and value bits.

FIG. 2 is a diagram showing a decoding scheme of a program guide data decoding apparatus according to an exemplary embodiment of the present invention. The template-based decoding scheme can be used since much of the XML data is identical in structure. Accordingly, by storing frequently used data structures in the form of templates, it may be possible to perform a fast decoding with reference to the templates. This is because only the value bits of the BiM fragment need to be decoded.

If no template having a structure identical to the BiM fragment exists, the control unit 130 decodes every bit of the BiM fragment and creates a new template. At this time, the control unit 130 first distinguishes structure bits and value bits. During the identification of the bits, the bits processed as a simple type according to a corresponding decoding schema are value bits, and the remaining bits are structure bits.

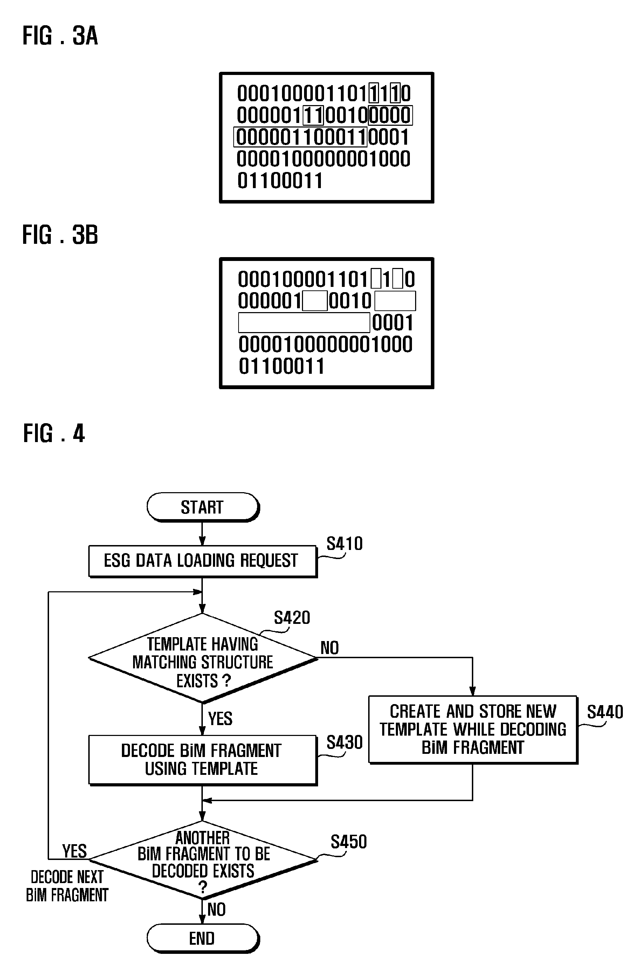

FIG. 3A and FIG. 3B are diagrams showing data structures of exemplary BiM fragments of a program guide data decoding apparatus according to an exemplary embodiment of the present invention.

Referring to FIG. 3A, the bits defined by block boundaries are value bits, and the rest of the bits are structure bits. The structure bits are specified in a decoding process section of the ISO/IEC standard (ISO/IEC FDIS 15938-1:2001 (E)). Table 1 shows template items existing in the BiM fragment data of FIG. 3A.

**Table 1**

| Template Item | Description | Result |
|---|---|---|
| 00010000 | Decoding Modes | 00010000 |
| 110 | schemaModeUdate | 110 |
| 1 | clearToAir yes | 1 |
| 1 | {clearToAir, Boolean, 1} | V |
| 1 | {freeToAir} yes | 1 |
| 0 | {freeToAir, Boolean, 1} {serviced, dvdString, 0} | V |
| 00000 | ServiceName number | 00000 |
| 0 | Length no | 0 |
| 1 | phoneticAlphabet yes | 1 |
| 11 | {phoneticAlphabet, enumeration, 2 | V |
| 0 | phoneticTranscription no | 0 |
| 0 | xml:lang no {content, dvdString, 0} | 0 V |
| 1 | ServiceNumber yes | 1 |
| 0 0000 0000 0000 0101 | {ServiceNumber, unsignedlnt, 17 | V |
| ... | ... | |

For example, the first template item "00010000" is not a bit sequence of 0's and 1's but rather is a structure indicating a Decoding mode, "110" of the second row is a structure bit sequence indicating a schema mode update (SchemaModeUpdate), "1" of the third row is a structure bit indicating that value bits follow, and "1" of the fourth row is a value bit.

The template items can be defined as shown in Table 2.

**Table 2**

| Template Item Description | |
|---|---|
| Type | STRUCTURE or VALUE |

| In STRUCTURE case: | |
|---|---|
| Bit | Indicate one bit, 0 or 1 |

| In VALUE case: | |
|---|---|
| Name | Name of Element or Attribute |
| data_type | Type or base type of Element or Attribute |
| length | Number of bits , -1 for variable bit |

The information is stored within the storage unit 120 in the form of Table 1 and Table 2. Thus, the control unit 130 may create a template with reference to the BiM fragment data.

In the above manner, the control unit 130 decodes the BiM fragment data as depicted in FIG. 3A while creating a template having a structure depicted in FIG. 3B with reference to the structure bits of the BiM fragment data.

The control unit 130 stores the template created in the above manner in the storage unit 120 and uses the template to decode a BiM fragment having an identical structure.

In this exemplary embodiment, the program data decoding apparatus 100 of the digital broadcast receiver can be in a mobile terminal such as DVB-H terminal supporting digital broadcast reception and playback. Although not depicted in FIG. 1, the program data decoding apparatus 100 of the digital broadcast receiver may include at least one of a short range wireless communication module, a memory slot to insert a storage media such as a memory card, a camera module, a voice input device such as microphone, a connection port to support data communication with an external device, a power charger port, and an audio playback module such as an MP3 module.

Although not listing all available devices, it is obviously understood by those skilled in the art that the program data decoding apparatus of the digital broadcast receiver may integrate various functional modules equivalent to the above mentioned modules.

FIG. 4 is a flowchart showing a program guide data decoding method for a digital broadcast receiver according to an exemplary embodiment of the present invention.

Referring to FIG. 4, the control unit 130 detects a program guide data request, i.e. ESG data loading is requested by a user, (S410), and checks a structure of a BiM fragment of the requested part of the ESG data and determines whether the structure of the BiM fragment matches one of the previously stored templates (S420). For example, when decoding a BiM fragment 210 illustrated in FIG. 2, the control unit 130 determines if a template matching the structure bits and values bits of the BiM fragment 210 exist in the storage unit 120.

If there is a template matching the structure of the BiM fragment, the control unit 130 decodes the BiM fragment using the matched template (S430). That is, the control unit 130 uses the structure of the template while decoding the value bits of the BiM fragment data.

In contrast, if no template matches the structure of the BiM fragment, the control unit 130 decodes each bit of the BiM fragment while creating and storing a new template with reference to the bit sequence of the BiM fragment (S440). As described above, the control unit 130 distinguishes the structure bits and value bits of the BiM fragment from each other and creates a new template using the structure bits.

After decoding the BiM fragment, the control unit 130 determines whether another BiM fragment to be decoded exists (S450). If another BiM fragment to be decoded exists, the control unit 130 returns to step S420.

In order to improve the decoding speed, the types of structure of the BiM fragments can be designated such that the type of structure is tagged to each BiM fragment or corresponding ESG container.

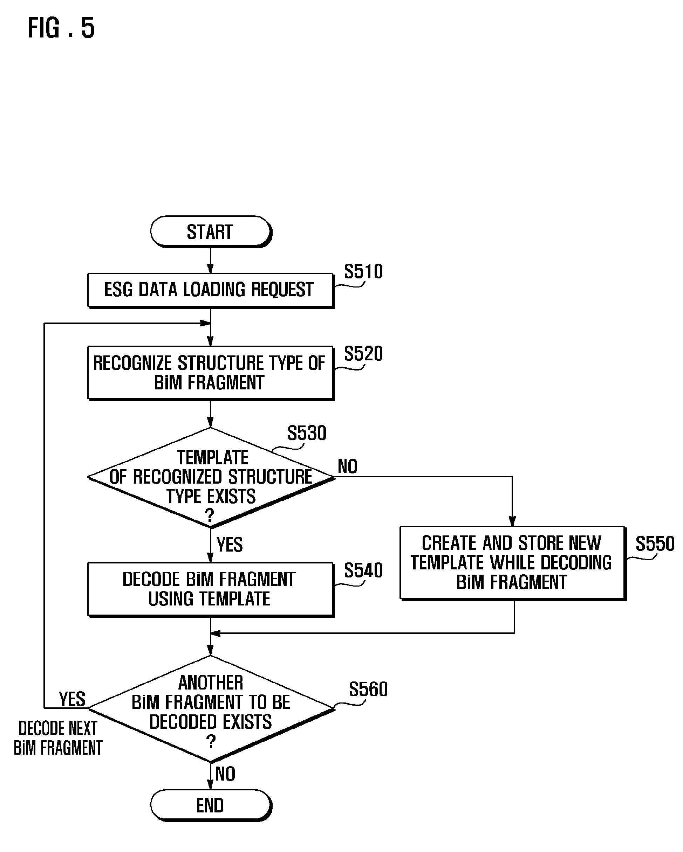

FIG. 5 is a flowchart showing a program guide data decoding method for a digital broadcast receiver according to another exemplary embodiment of the present invention.

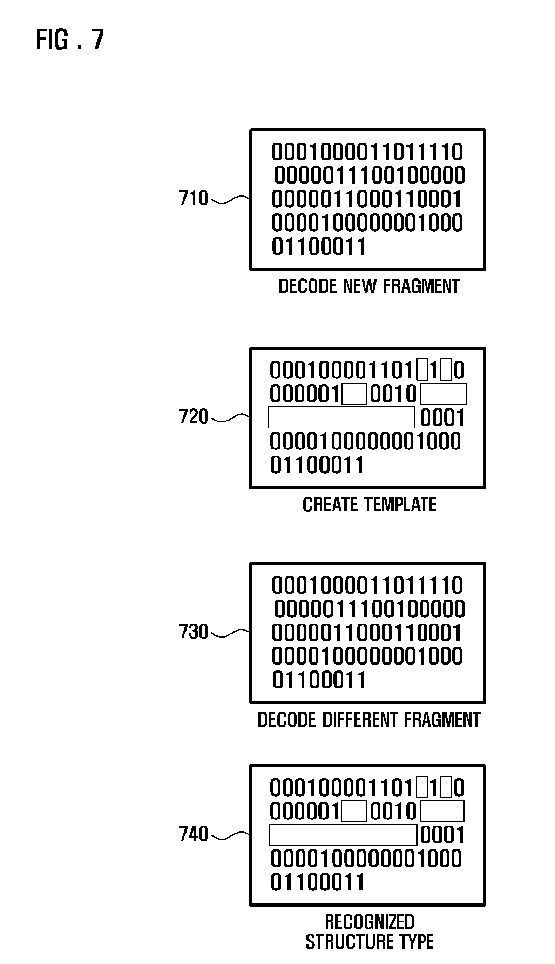

Referring to FIG. 5, if ESG data loading is requested (S510), the control unit 130 recognizes the structure type of the BiM fragment of the ESG data requested to be loaded (S520). Next, the control unit 130 determines whether a template having the recognized structure type exists in the storage unit 120 (S530). For example, when decoding a BiM fragment 730 illustrated in FIG. 7, the control unit 130 checks the structure bits of a BiM fragment 730, and recognizes a structure type of the BiM fragment 730. Next, the control unit 130 determines if a template having a recognized structure type 740 exists in the storage unit 120.

If a template having the recognized structure type exists in the storage unit 120, the control unit 130 decodes the BiM fragment using the structure type (S540).

In contrast, if a template having the recognized structure type does not exist, the control unit 130 decodes each bit of the BiM fragment while creating and storing a new template (S550).

For example, if it is determined that there is no template of which structure matches with that of the BiM fragment, the control unit 130 creates a new template with reference to the structure of the BiM fragment (see FIG 7). FIG. 7 is a diagram showing steps of creating a new template in a program guide data decoding method according to an exemplary embodiment of the present invention. As shown in FIG. 7, a new fragment 710 is to be decoded. There is no matching template for the fragment 710 so each bit of the fragment 710 is decoded and a new template 720 is created. When another fragment 730 is to be decoded, the structure type of the fragment 730 is recognized, and compared to stored templates. Recognized structure type 740 is found to match the template 720, which is then used to decide the fragment 730.

Next, the control unit 130 determines whether another BiM fragment to be decoded exists (S560). If another BiM fragment to be decoded exists, the control unit 130 returns to step S520.

For example, if it is required to decode another BiM fragment, the control unit checks the structure type of the BiM fragment of the request ESG data and decodes the BiM fragment using the template having the identical structure type.

As described above, the program guide data decoding method of exemplary embodiments of the present invention can store the templates having designated structure types before receiving the ESG data or store the templates with the structure types with reference to the BiM fragments while receiving the ESG data.

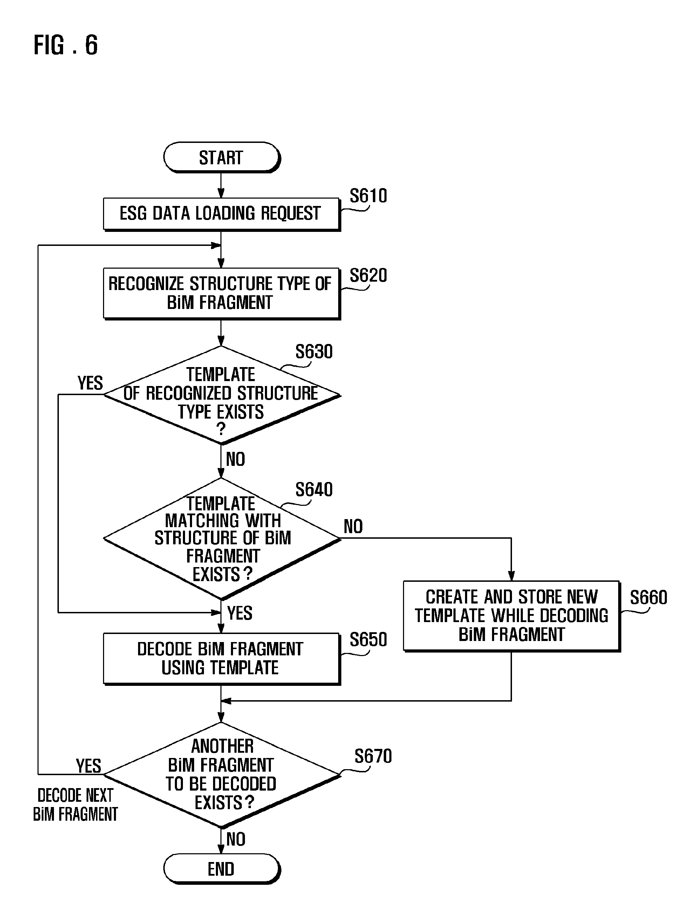

FIG. 6 is a flowchart showing a program guide data decoding method for a digital broadcast receiver according to another exemplary embodiment of the present invention.

Referring to FIG. 6, if ESG data loading is requested (S610), the control unit 130 recognizes the structure type of the BiM fragment of the ESG data requested to be loaded (S620). Next, the control unit 130 determines whether a template having the recognized structure type exists in the storage unit 120 (S630).

If a template having the recognized structure type exist, the control unit 130 decodes the BiM fragment using the structure type (S650). For example, when decoding a BiM fragment 210 illustrated in FIG. 2, the control unit 130 determines if a template matching the structure bits and values bits of the BiM fragment 210 exist in the storage unit 120.

In contrast, if a template having the recognized structure type does not exist, the control unit 130 analyzes the structure of the BiM fragment of the requested ESG data and determines whether a template having a structure that matches that of the BiM fragment exists (S640). For example, when decoding a BiM fragment 730 illustrated in FIG. 7, the control unit 130 checks the structure bits of a BiM fragment 730, and recognizes a structure type of the BiM fragment 730. Next, the control unit 130 determines if a template having a recognized structure type 740 exists in the storage unit 120.

If a template having a structure identical to that of the BiM fragment exists, the control unit 130 decodes the BiM fragment using the template (S650). Otherwise, the control unit 130 decodes each bit of the BiM fragment while creating and storing a new template with reference to structures bits of the BiM fragment (S660).

Next, the control unit 130 determines whether another BiM fragment to be decoded exists (S670). If another BiM fragment to be decoded exists, the control unit 130 returns to step S620.

As described above, the program guide data decoding method and apparatus of the present invention decodes ESG data with reference to previously stored templates that each reflect the structure of a specific ESG data unit, which may result in fast and efficient data decoding.

Also, the fast decoding performance of the program guide data decoding method and apparatus of the present invention reduces ESG loading delay, which may improve user convenience. It will be apparent to those skilled in the art that various modifications and variations can be made in the present invention without departing from the spirit or scope of the invention. Thus, it is intended that the present invention cover the modifications and variations of this invention provided they come within the scope of the appended claims and their equivalents.

## Claims

1. A data decoding method comprising:
detecting a request to decode structural data comprising a data unit (S610);
recognizing a structure type of the data unit (S620);
determining whether a template corresponding to the structure type exists (S630); and
decoding the structural data using the template corresponding to the structure type when the template corresponding to the structure type exists (S650).

2. The data decoding method of claim 1, further comprising determining whether a template matching a structure of the data unit exists when the template corresponding to the structure type does not exist (S640).

3. The data decoding method of claim 2, further comprising decoding each bit of the data unit when the matching template does not exist (S660).

4. The data decoding method of claim 3, further comprising:
creating a new template while decoding each bit of the data unit when the matching template does not exist (S660); and
storing the new template. (S660)

5. The data decoding method of claim 4, wherein creating a new template (S660) comprises:
classifying bits of the data unit into structure bits and value bits; and
generating the new template with reference to the structure bits.

6. The data decoding method of claim 5, wherein the structural data comprises a plurality of data units, and
wherein decoding the structural data further comprises referencing stored templates to decode other data units constituting the structural data (S670).

7. The data decoding method of claim 6, wherein the structural data is a program guide data comprising electronic service guide (ESG) data.

8. The data decoding method of claim 7, wherein each data unit is a Binary format for Multimedia description stream (BiM) fragment.

9. The data decoding method of claim 6, wherein decoding the structural data (670) is performed repeatedly until all data units are decoded.

10. A digital broadcast receiver having a broadcast reception module (110) to demodulate a broadcast signal received through a tuned service channel, comprising:
a storage unit (120) to store a plurality of templates used in decoding program guide data; and
a control unit (130) to extract program guide data from the broadcast signal, store the program guide data in the storage unit, and decode the program guide data using the templates in response to a decoding request.

11. The digital broadcast receiver of claim 10, wherein the program guide data comprises Electronic Service Guide (ESG) data.

12. The digital broadcast receiver of claim 10, wherein the control unit(130) decodes each Binary format for Multimedia description stream (BiM) fragment included in the ESG data required to be decoded.

13. The digital broadcast receiver of claim 12, wherein the control unit (130) determines whether a template matching a structure of the BiM fragment exists and decodes the BiM fragment using the template matching the structure of the BiM fragment when the matching template exists.

14. The digital broadcast receiver of claim 13, wherein the control unit (130) decodes each bit of the BiM fragment when the matching template does not exist.

15. The digital broadcast receiver of claim 14, wherein the control unit (130) creates a new template while decoding each bit of the data unit when the matching template does not exist, and stores the new template.

16. The digital broadcast receiver of claim 15, wherein the control unit (130) classifies bits of the BiM fragment into structure bits and value bits and creates the new template with reference to the structure bits.
